# EUROPEAN PATENT APPLICATION

(11) **EP 1 924 100 A2**
(43) Date of publication of application: **21.05.2008**
(21) Application number: 07120742.7
(22) Date of filing: 15.11.2007
(51) Int. Cl.: H04N 7/50

(54) **Method of transcoding data from the MPEG2 standard to an MPEG4 standard**

(30) Priority: 16.11.2006 FR 0654937
(71) Applicant: Thomson Licensing, 92100 Boulogne-Billancourt (FR)
(72) Inventor: Thoreau, Dominique, 35510 Cesson-Sévigné (FR); Cosmao, Michel, 35340 LIFFRE (FR); Chevance, Christophe, 35530 BRECE (FR)
(74) Representative: Berthier, Karine

(57) **Abstract**

The method is characterized in that, if the data relating to a first macroblock indicates that it is coded in frame prediction and field DCT mode, it comprises the following steps:
- determination of the second macroblock (3, 4) in the image which, with the first (3, 4), forms a supermacroblock, each of the macroblocks having an associated MPEG2 inter-frame motion vector, V₀ and V₁,
- structuring of the macroblock (3, 4) in field mode (5, 6) and calculation of a partitioning (18, 19, 20, 21, 22, 23) of this supermacroblock according to the MPEG2 motion vectors V₀ and V₁,
- calculation of the motion vectors for each of the partitions according to the MPEG2 motion vectors V₀ and V₁.

## Description

The invention relates to a method and a device for transcoding a sequence of images from the MPEG2 standard to an MPEG4 standard.

The field is that of video compression for storing or transmitting audio and video data. Interest is particularly focused on the block compression schemes applied to the interlaced images, in the context of transcoding operations from MPEG2 to MPEG4.

Interlaced video is the format most commonly used for television. A frame is made up of two fields, even and odd, also called top field and bottom field, which respectively represent the odd and even lines of the image. Since the top field and the bottom field are acquired at two different instants, certain images of a sequence present interlacing artefacts due to a motion between the two acquisitions.

To better support this format, the MPEG 4 or H.264 standard can be used to code an image according to three different modes: "frame", "field", "MBAFF" (acronym for "Macro Block Adaptive Field Frame"). In frame mode, the interlaced image is coded as it is, and in field mode, the two fields are coded separately. The MBAFF mode can be used in addition to the frame mode to enhance this mode by making it possible to locally separate the fields of the image, this mode, also called frame + MBAFF, making it possible to code groups of macroblocks of the frame in field mode.

Hereinafter, a block made up of lines of a single field will be called field block, a block made up alternately of an even field line and an odd field line will be called frame block. A block of coefficients calculated by discrete cosine transformation of a block of field, respectively frame, residues will be called field DCT block, respectively frame DCT block, obtained by field DCT coding, respectively frame DCT coding.

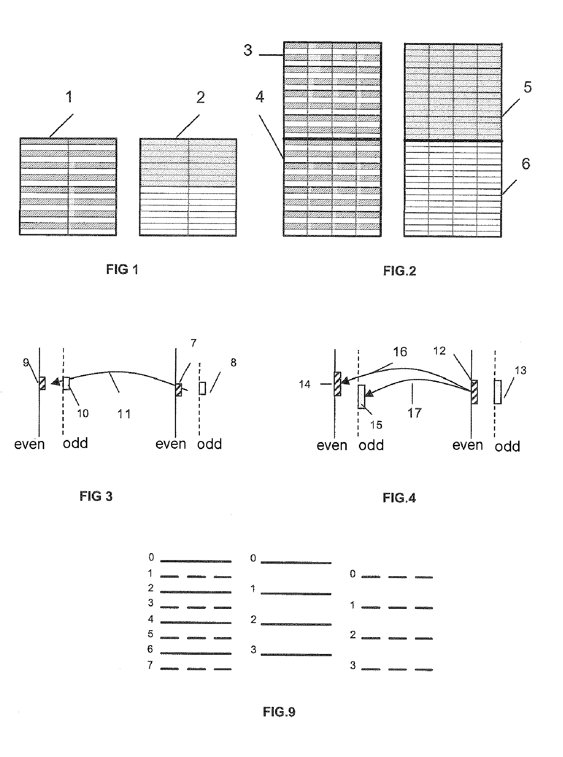

Figure 1 represents macroblocks of a frame coded according to the MPEG2 standard. In this standard, the prediction concerning these macroblocks uses the frame macroblocks to make the motion estimation whereas the DCT coding of these same macroblocks can be performed on field or frame blocks that make up this macroblock.

Thus, as mentioned in section 6.1.3 of the MPEG2 standard, document ISO/IEC 13818-2: 1996, entitled Macrobloc, in the frames, for which the DCT coding can be used to form images both with two fields and with one field, the internal organization of the macroblock is different according to the image type:
- in the case of the DCT coding of two-field images, each 8x8 DCT block must be made up of lines obtained alternately from one and the other field, as represented at 1 in Figure 1.
- in the case of the DCT coding of single-field images, each block must be made up of lines obtained from just one of the two fields, as represented in 2 in Figure 1.

In the case of single-field images, each contains only the lines obtained from one of the two fields. In this case, each block of a macroblock is made up of lines extracted from the succession of the lines of the image.

In the figures, the shaded lines correspond to a first field or top field and the unshaded lines to a second field or bottom field.

Figure 2 represents macroblocks of an image coded according to the MPEG4 standard. This standard comprises an additional coding mode called MBAFF, where the frame is scanned in vertical pairs of macroblocks. For each pair of macroblocks, a field or frame coding decision is calculated. These two vertical macroblocks MB constitute a supermacroblock SMB. The coding of the supermacroblock in frame mode produces an arrangement, for their prediction and their DCT coding, in two macroblocks, referenced 3 and 4, each comprising an alternation of lines from a first field and from a second field. The coding of the supermacroblock in field mode produces an arrangement in two macroblocks, referenced 5 and 6, each comprising a succession of lines belonging respectively to the first and the second field.

The DCT transform is performed on macroblocks of 4x4 pixels making up these macroblocks or this supermacroblock.

The MPEG2 standard allows a prediction between fields, of the same parity or of opposite parity, or between frames, and, for the prediction between frames, a DCT coding of blocks of 8x8 frame residues or of blocks of 8x8 field residues, after rearrangement of the macroblock. The MPEG4 standard dictates, for the DCT coding of the blocks of residues of a macroblock, the same mode, field or frame, as that used for the prediction of this macroblock.

The MPEG2 stream to be transcoded to an MPEG4 stream is partially decoded. For example, the headers relating to the macroblocks are decoded, the coding mode, the motion vectors, the DCT type used, field or frame, etc., are extracted. The transcoding in MPGE4 mode uses this information, the coding modes being, generally, retained for the compatible modes. The DCT coefficients are not decoded. This transcoding makes it possible to save, among other things, on costly movement estimation operations.

The problem arises when a macroblock of size 16x16 of a frame of the MPEG2 stream is coded according to the field DCT coding mode, the 16x16 macroblock being arranged in two 16x8 field blocks, themselves arranged in two 8x8 field blocks for the DCT transformation. In this case, according to one solution from the prior art, the MPEG4 transcoding is performed by assuming that the DCT blocks are frame blocks corresponding to a movement prediction or estimation on frame macroblocks. In practice, as indicated previously, the MPEG4 standard uses, for the DCT coding, only the blocks whose structure, field or frame, corresponds to that on which the movement estimation or prediction was performed. This solution, which therefore consists in likening the field DCT blocks of the coded frame of the MPEG2 stream to frame DCT blocks, on the MPEG4 transcoding, generates decoding errors. In practice, this is tantamount to likening the MPEG2 DCT coefficients to frame block coefficients whereas the calculations have been performed on field blocks, the decoding of these blocks then creating artefacts.

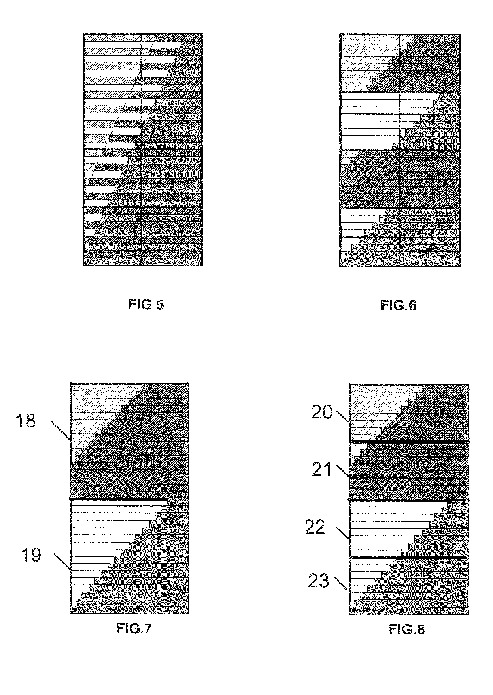

Another solution involves performing a decoding of the field DCT blocks by inverse discrete cosine transformation to obtain blocks of field residues, rearranging in the macroblock these field blocks to obtain frame blocks and performing a DCT transformation of these frame pixel blocks to obtain frame block DCT coefficients. This procedure incurs a high processing cost, the coding cost possibly also being high, in particular for object boundary areas in relative motion, because of the high vertical frequencies, as represented for example in Figure 5.

These solutions are therefore not optimal, whether from the processing time or image quality point of view.

One aim of the invention is to overcome the abovementioned drawbacks. The subject of the invention is a method of transcoding data from the MPEG2 standard to an MPEG4-type standard comprising an MBAFF (MacroBlock Adaptive Field Frame) mode, characterized in that, if the data relating to a first macroblock indicates that it is coded in frame prediction and field DCT mode, it comprises the following steps:
- determination of the second macroblock in the image which, with the first, forms a supermacroblock, each of the macroblocks having an associated MPEG2 inter-frame motion vector, V₀ and V₁,
- structuring of the macroblock in frame mode and calculation of a partitioning of this supermacroblock according to the MPEG2 motion vectors V₀ and V₁,
- calculation of the motion vectors for each of the partitions according to the MPEG2 motion vectors V₀ and V₁.

According to one particular embodiment, the supermacroblock is of size 16x32, is partitioned into two 16x16 field macroblocks if the MPEG2 motion vectors V₀ and V₁ are equal or into four 8x16 field sub-macroblocks otherwise.

According to one particular embodiment, the motion vectors associated with the partitions of the supermacroblock are calculated by using a field reference base instead of frame reference base.

According to one particular embodiment, the step for calculation of a motion vector of a partition of a supermacroblock consists in calculating the vertical component of the motion vectors according to the following equations:
- if the modulo 2 of the absolute value of the vertical component dy of the vector V₀, respectively V₁, is equal to 0, the absolute value of the vertical component Dy of the partition is equal to |dy|/2, and Dy has the same sign as dy,
- if the modulo 2 of the absolute value of the vertical component dy of the vector V₀, respectively V₁, is equal to 1, the absolute value of the vertical component Dy of the partition is equal to (|dy|-1)/2, and Dy has the same sign as dy.

According to one particular embodiment, the headers relating to the macroblocks are modified to insert the information for defining the new calculated coding modes corresponding to the partitions, field predictions and field DCT codings, and the motion vector fields are modified to insert the information for defining the calculated values of the motion vectors.

The invention also relates to a transcoding device according to the abovementioned method, characterized in that it comprises:
- a circuit for receiving the MPEG2 data stream,
- a circuit for extracting, from the data stream, and storing the coding mode of the macroblocks and the motion vectors,
- a processing circuit linked to the extraction circuit for detecting the macroblocks coded in frame prediction mode + field DCT mode and associating them with a top or bottom macroblock to form supermacroblocks and for calculating a partitioning of the supermacroblock and of the motion vectors of the partitions from the extracted data, to supply data relating to the partitioning and to the motion vectors of each partition of the supermacroblock,
- a circuit for inserting or substituting, in the MPEG2 data stream, data originating from the processing circuit to provide an MPEG4 data stream.

The de-interlacing of the macroblocks to be coded, obtained by the MBAFF mode, makes it possible in an initial MPEG2 frame prediction and field DCT context, to best adapt to the supermacroblock structure provided with the prediction and DCT field constraint, involving an adjustment of the motion vectors. The MPEG2 data stream can supply blocks of field DCT coefficients for a macroblock predicted in frame mode. By exploiting the possibility of an MPEG4 coding of the macroblocks of a supermacroblock of a frame in field mode, it is possible to use the fact that the blocks, of a frame macroblock, have been determined in field DCT mode in the MPEG2 coding. The MBAFF mode makes it possible to reconfigure a supermacroblock of a frame as two macroblocks or field macroblock partitions. A frame macroblock structure is converted into a field structure, the calculation of the DCT for the MPEG4 standard then working implicitly in field structure mode, on the residual prediction error as for the MPEG2 standard, but in 4x4 DCT or 8x8 DCT mode depending on the nature of the profile used, namely 4x4 DCT for the main profile, 4x4 DCT or 8x8 DCT for the high profile. The duly retained field mode is the mode that has made it possible to obtain the fewer high frequency coefficients or at least lower amplitude coefficients, in the DCT transformation, because of the very de-interlacing of the residue blocks.

A frame prediction in the MPEG2 coding presupposes that this prediction gives the best correlation. Now, the transcoding, according to the inventive method, proposes dictating a field prediction when the DCT coding is performed on a field block. In practice, the saving on the DCT coding is, on average, much greater than the loss that would result from the change of prediction, that is, from a less good prediction or correlation between fields than between frames. In other words, that which can be lost in prediction is much less than that which is gained in the DCT. Also, the choice of the frame prediction mode does not necessarily indicate a better correlation, the coding of the vectors in field prediction mode being more costly than in frame prediction mode.

The method therefore consists in selecting, for the transcoding relating to a current macroblock, the second macroblock forming, with this current macroblock, the supermacroblock, then in determining, from the MPEG2 motion vectors, the prediction vectors of each of the field macroblocks of the supermacroblock of the frame. The MPEG2 motion vectors used for the frame prediction are corrected to be used, in the MPEG4 decoding, to calculate the predicted field block in the reference field, the coding of a motion vector using a different reference base, taking into account the numbering of the field lines, and no longer frame, lines.

Other features and advantages of the invention will become clearly apparent from the description given below, by way of non-exclusive example, and given in light of the appended drawings which represent:
- Figure 1, a macroblock of a frame in frame prediction mode,
- Figure 2, a supermacroblock of a frame made up of frame macroblocks and made up of field macroblocks,
- Figure 3, a motion vector of a frame,
- Figure 4, two motion vectors of a field,
- Figure 5, two macroblocks in frame mode,
- Figure 6, two macroblocks made up of blocks in field mode,
- Figure 7, a supermacroblock made up of macroblocks in field mode,
- Figure 8, a supermacroblock made up of two macroblocks in field mode,
- Figure 9, a frame reference base and a field reference base.

Figure 3 illustrates the principle of the image mode prediction in the MPEG2 standard, for a macroblock of size 16x16 of a frame, comprising an interlacing of even lines 7 and odd lines 8. The prediction macroblock is made up of an interlacing of even lines 9 and odd lines 10, and therefore originates from the interlaced reference image. The prediction macroblock conforms to the arrangement of the macroblock referenced 1 in Figure 1 and the blocks of field residues on which the discrete cosine transformation is performed, in the case where a field selection is decided for the DCT calculation, conform to the arrangement of the macroblock referenced 2 in Figure 1, made up of four blocks. The motion vector associated with the macroblock is referenced 11.

Figure 4 illustrates the principle of the field prediction in the MPEG4 standard, for a supermacroblock of a frame coded in field mode. The supermacroblock extracted from the image corresponds to the macroblocks referenced 3 and 4 in Figure 2. This supermacroblock is arranged in two field macroblocks, referenced 12 and 13, corresponding to partitions 5 and 6 of the supermacroblock in Figure 2. A prediction macroblock is calculated in each of the two field of the prediction image, macroblocks 14 and 15, for the top partition 12 corresponding to the first field, to select the best correlated. A first motion vector corresponding to the selected macroblock, 16 or 17, is associated with the supermacroblock, the second motion vector being relative to the bottom partition 13 of the supermacroblock.

The field DCT coding mode, for a macroblock in frame prediction mode, occurs when the prediction is applied in frame mode to an object in motion and in particular to the boundaries of the object. This phenomenon is illustrated by Figure 5 representing two macroblocks of a frame containing these boundaries, obviously strongly chopped, generating vertical high frequencies, but regularly, the reason why the prediction is despite everything made in frame mode, from this chopped structure. The offset from one line to another corresponds to the temporal distance between fields for the boundary of the object moving rapidly. These shadings can generate very high frequencies in the DCT domain of the residual blocks of 8x8 pixels in MPEG2. If such is the case, a coding decision algorithm normally de-interlaces the macroblocks to perform a DCT calculation on field blocks, called field DCT. Figure 6 represents the structure of the two macroblocks of the frame each arranged as two field blocks, themselves partitioned into two 8x8 blocks, the DCT calculation being performed on the four field blocks of 8x8 residues of each of the macroblocks.

When the prediction, in the MPEG2 standard, has been performed, for the macroblock, in frame mode, and the DCT coding has been performed in field mode, the inventive method calculates a correction of the motion vectors obtained from the motion estimation in the MPEG2 coding, to adapt them to a field mode prediction, and defines an appropriate partition for the supermacroblock, this information being inserted into the data stream in place of or in addition to the data originating from the MPEG2 coding.

The conversion of the vectors originating from the MPEG2 coding of a frame into vectors associated with the macroblocks coded in field mode, and the determination of the sub-partitions, are described below.

The MPEG2 stream data is stored, at least at the level of an image, to associate the macroblocks of the image in pairs of macroblocks. Let MB₀ and MB₁ be the two macroblocks "obtained" from MPEG2, the counterparts of the top (MBₜₒₚ) and bottom (MB_{bot}) macroblocks of MPEG4 supermacroblock SMB, respectively provided with the vectors:
V₀(dx₀, dy₀),
V₁(dx₁, dy₁)
dx and dy being the horizontal and vertical components of the vectors.

The vertical components of the motion vectors dy are modified, to become Dy, when changing from a frame prediction to a field prediction, that is, from a frame reference base to a field reference base, the horizontal components being retained.

### Case 1: V₀ = V₁

If V₀ = V₁ for the MPEG2 motion vectors relating to the frame macroblocks, the MPEG4 predictions can be assumed to be carried out, with these vectors, on each of the two 16x16 field sub-partitions of the supermacroblock, referenced 18 and 19 in Figure 7.

The vectors of these two macroblocks or sub-partitions that make up the supermacroblock are named:
Vₜₒₚ(dx₀, Dy₀) for the top sub-partition 18,
V_{bot}(dx₁, Dy₁) for the bottom sub-partition 19.

The prediction is carried out for the sub-partitions of size 16x16.

### Case 2: V₀≠ V₁

If V₀ is not equal to V₁ for the MPEG2 motion vectors relating to the frame macroblocks, it is wise not to use one and the same vector, that is, one and the same MPEG4 prediction, for a field macroblock comprising lines from each of the frame macroblocks. Thus, the predictions will be assumed to be carried out for each of the 8x16 sub-partitions of the supermacroblock, 8 lines of 16 pixels, referenced 20 to 23 in Figure 8. The vectors of these sub-partitions are called:
- V₀ₜₒₚ(dx₀, Dy₀) for the top sub-partition referenced 20 of the 16x16 top block of the supermacroblock in field mode,
- V₁ₜₒₚ(dx₁, Dy₁) for the bottom sub-partition 21 of the 16x16 top block of the supermacroblock in field mode,
- V_{0bot}(dx₀, Dy₀) for the top sub-partition referenced 22 of the 16x16 bottom block of the supermacroblock in field mode,
- V_{1bot}(dx₁, Dy₁) for the bottom sub-partition 23 of the 16x16 bottom block of the supermacroblock in field mode.

### Determining the vertical movement vectors Dy

The vectors originating from the MPEG2 coding on the one hand are accurate to half a pixel and on the other hand are expressed in the frame reference base. Figure 9 represents, in the left part, such a field of reference, the continuous lines correspond to the even field and the dotted lines correspond to the odd field. To convert these vectors into prediction vectors field to field using a field reference base, represented in the right-hand part of Figure 9, it is wise to consider the parity of the field to which the vector of the current field is forced to point.

Depending on the affiliation of the sub-partition to the even field or to the odd field, the value of the vertical movement vector dy expressed in the frame reference base will dictate the choice of the reference field.

### The proposed procedure is as follows:

If the modulo 2 of the absolute value of the vector dy (denoted |dy| %2) is equal to 1:
- the vector Dy of the sub-partition in field mode points to the field of opposite parity. The movement referenced 17 in Figure 4 corresponds to such a vector.
- the absolute value of the vector |Dy| = (|dy|-1)/2
- Dy has the same sign as dy

Otherwise ((|dy| %2 ≠ 1):
- the vector Dy of the sub-partition in field mode points to the field of the same parity. The movement referenced 16 in Figure 4 corresponds to such a vector.
- the absolute value of the vector |Dy| = |dy|/2
- Dy has the same sign as dy

The values Dy (Dy₀ or Dy₁) take account of the field reference base, that is, the numbering of the lines for a field, dy being relative to a frame reference base.

Alternatively, for a vector of an 8x16 sub-partition of the supermacroblock, a value dy (dy₀ or dy₁ depending on the partition concerned) that is a multiple of 2 corresponds to a choice of the reference field of the same parity, a movement that is not a multiple of 2 corresponds to a choice of field of opposite parity. The opposite parity field is chosen when in frame prediction mode (MPEG2), the movement corresponds to a change of field. Once the vector is converted, in case of a non-integer movement between fields of the same parity, half or quarter pixel, interpolation is preferred, the integer movement not posing a problem. Similarly, once the vector is converted, in case of non-integer movement between field of opposite parity, half or quarter pixel, interpolation is used.

The invention also relates to a transcoding device implementing the method described previously. This device comprises a circuit for receiving an MPEG2-type data stream. From this stream are extracted, among other things, the coding modes and motion vectors of the macroblocks of the coded image, via an extraction and storage circuit linked to the preceding reception circuit. The extracted information is stored, for example at the level of the complete image. A processing circuit retrieves the extracted data relating to the macroblocks, detects the macroblocks coded in frame prediction + field DCT mode and associates them or pairs them with a top or bottom macroblock in the image, to form MPEG4-type supermacroblocks. This circuit then performs a partitioning and a correction of the motion vectors for the paired macroblocks or supermacroblocks. Thus, it calculates the partitioning of the supermacroblock and the motion vectors assigned to the partitions. This data is then structured to be inserted into or substituted for data from the MPEG2 stream to provide an MPEG4 data stream, via a data insertion or substitution circuit.

The invention applies to the MPEG2 and MPEG4 standards, in particular the MPEG4 part 10 or H.264 standard, that uses the MBAFF coding mode. The applications relate, among other things, to data transmission such as broadcasting and data storage.

## Claims

1. Method of transcoding data from the MPEG2 standard to an MPEG4-type standard comprising an MBAFF (MacroBlock Adaptive Field Frame) mode, **characterized in that**, if the data relating to a first macroblock indicates that it is coded in frame prediction (1) and field DCT (2) mode, it comprises the following steps:
- determination of the second macroblock (3, 4) in the image which, with the first (3, 4), forms a supermacroblock, each of the macroblocks having an associated MPEG2 inter-frame motion vector, V₀ and V₁,
- structuring of the macroblock (3, 4) in field mode (5, 6) and calculation of a partitioning (18, 19, 20, 21, 22, 23) of this supermacroblock according to the MPEG2 motion vectors V₀ and V₁,
- calculation of the motion vectors for each of the partitions according to the MPEG2 motion vectors V₀ and V₁.

2. Method according to Claim 1, **characterized in that** the supermacroblock (3, 4) is of size 16x32, is partitioned into two 16x16 field macroblocks (18, 19) if the MPEG2 motion vectors V₀ and V₁ are equal or into four 8x16 field sub-macroblocks (20, 21, 22, 23) otherwise.

3. Method according to Claim 1, **characterized in that** the motion vectors associated with the partitions of the supermacroblock are calculated by using a field reference base instead of frame reference base.

4. Method according to Claim 1, **characterized in that** the step for calculation of a motion vector of a partition of a supermacroblock consists in calculating the vertical component of the motion vectors according to the following equations:
- if the modulo 2 of the absolute value of the vertical component dy of the vector V₀, respectively V₁, is equal to 0, the absolute value of the vertical component Dy of the partition is equal to |dy|/2, and Dy has the same sign as dy,
- if the modulo 2 of the absolute value of the vertical component dy of the vector V₀, respectively V₁, is equal to 1, the absolute value of the vertical component Dy of the partition is equal to (|dy|-1 )/2, and Dy has the same sign as dy.

5. Method according to Claim 1, **characterized in that** the headers relating to the macroblocks are modified to insert the information for defining the new calculated coding modes corresponding to the partitions, field predictions and field DCT codings, and the motion vector fields are modified to insert the information for defining the calculated values of the motion vectors.

6. Transcoding device according to the method of Claim 1, **characterized in that** it comprises:
- a circuit for receiving the MPEG2 data stream,
- a circuit for extracting, from the data stream, and storing the coding mode of the macroblocks and the motion vectors,
- a processing circuit linked to the extraction circuit for detecting the macroblocks coded in frame prediction mode + field DCT mode and associating them with a top or bottom macroblock to form supermacroblocks and for calculating a partitioning of the supermacroblock and of the motion vectors of the partitions from the extracted data, to supply data relating to the partitioning and to the motion vectors of each partition of the supermacroblock,
- a circuit for inserting or substituting, in the MPEG2 data stream, data originating from the processing circuit to provide an MPEG4 data stream.
